# EUROPEAN PATENT APPLICATION

(11) **EP 1 593 996 A2**
(43) Date of publication of application: **09.11.2005**
(21) Application number: 05009607.2
(22) Date of filing: 02.05.2005
(51) Int. Cl.: G02B 21/16

(54) **Microscope fluorescence illumination apparatus**

(30) Priority: 06.05.2004 JP 2004137439
(71) Applicant: Olympus Corporation, Tokyo 151-0072 (JP)
(72) Inventor: Yamaguchi, Katsuyoshi, c/o Olympus Corporation, Hachioji-shi Tokyo (JP)
(74) Representative: von Hellfeld, Axel

(57) **Abstract**

A microscope fluorescence illumination apparatus includes a light source (4) having a solid-state illumination device which generates illumination light, an illumination optical system (5,6,7) which guides the illumination light from the light source onto a sample (S), and a controller (13) configured to control turning ON and OFF of the solid-state illumination device and dimming of the illumination light.

## Description

The present invention relates to a microscope fluorescence illumination apparatus for use in a fluorescence microscope for observing fluorescence from a living tissue in a research field such as medicine or biology.

In the field of medicine and biology, it has been well known that a fluorescence microscope is used to observe a protein, a gene and the like to which a fluorescence label has been applied on a living tissue cell.

In the fluorescence microscope, when illumination light (excitation light) including only a wavelength of a specific width is emitted to a living cell to which a fluorescence label has been applied, the living cell emits light (fluorescence) with a wavelength which is longer than the excitation light, and this fluorescence is observed.

In the meantime, a light source having a continuous wavelength such as a mercury lamp or a xenon lamp is used as a fluorescence observation illuminating apparatus for use in a fluorescence microscope, and the light generated from such a light source is emitted to a sample as excitation light.

However, the light from the mercury lamp or xenon lamp has a plenty of wavelength components, and thus, the light from which a specific wavelength component has been extracted is emitted to a sample as excitation light by using a wavelength selecting filter called an excitation filter. From this fact, a variety of filters are mounted, and further, a filter device enabling switching of these filters is required, thus requiring a large space required for mounting the filter device. In addition, since the mercury lamp and xenon lamp are large in size and much in heat radiation, its handling is inconvenient.

Recently, a fluorescence microscope using solid-state illumination devices such as one or a plurality of light emitting diodes (LEDs), laser diodes (LDs), and organic electro-luminescences (ELs) is devised as a light source.

From among the solid-state illumination devices, in particular, an LED becomes prevailingly known with high luminescence. From among them, an LED emitting white light has been used as an illumination in a variety of fields. In addition, a single color LED is also higher in luminescence or is diversified in light emitting wavelength, and is widely used for display such as a signal indicator. Further, when an LED is used as an illumination light source of a microscope, a plenty of advantages such as free maintenance, downsizing of an illuminating apparatus, low power consumption, and reduction of heat generation can be expected by downsizing, exterminated service life, low heat generation and the like which are features of the LED.

For example, Jpn. Pat. Appln. KOKAI Publication No. 2001-154103 discloses an illuminating apparatus achieving space reduction and good operability capable of eliminating a variety of adjustments during replacement of a conventional lamp by using an array of white color LEDs and switching a bright-field observation or a dark-field observation of a microscope by switching lighting portions in the same LED array.

In Jpn. Pat. Appln. KOKAI Publication No. 2002-131648, there is provided a fluorescence microscope achieving space reduction which does not require an excitation filter by using it for an illuminating apparatus for a fluorescence microscope by paying attention to the fact that a single color LED is in a wavelength bandwidth of orders of several tens of nm in width. Further, excitation light illumination using the LED is used as a transmission type or incident-light type dark-field optical system, thus enabling fluorescence observation with high sensitivity having an improved signal-to-noise ratio.

In the meantime, in fluorescence observation using a fluorescence microscope, a sample dyed in advance by a fluorescence dyes is used, and thus, the shortage of an amount of observation light due to time lapse deterioration of the fluorescence dyes, that is, bleaching becomes a problem. In order to avoid this problem, bleaching is reduced by shielding unnecessary excitation light at a time other than during observation or during photography using a mechanical shutter. Reasons why the mechanical shutter is used are that the mercury lamp or xenon lamp which is a light source requires a time from temporary turning OFF to turning ON again and that a longer time is required for light emission of a lamp itself to be stabilized.

On the other hand, activities of living cells or living tissues (information transmission activities inside or outside the cells and tissues) are actively analyzed and researched due to fluorescence imaging with fastness and/or high performance of a cooling CCD camera and image intensifier (II), that is, a CCD camera and advancement of a fluorescence protein represented by a green fluorescent protein (GFP).

In such fluorescence imaging of living cells or tissues (a technique of analyzing activities of living cells or living tissues from their images in a spatial manner and in time series), the damage to the living cells and living tissues due to the excitation light becomes a more serious problem in addition to a problem with the shortage of an amount of observation light due to bleaching of the fluorescence dyes described previously. From this fact, in fluorescence imaging as described above in which it is desired to achieve required minimal excitation light emission and to utilize an observation target as continuously as possible, opening or closing of a high speed shutter or turning operation of a high speed filter turret having a light shield plate mounted thereon is employed for the purpose of avoiding unnecessary excitation light emission to a sample.

However, the high speed shutter or the filter turret uses a mechanical mechanism, thus requiring a switching time of several milliseconds to several tens of milliseconds. In the case of using a high speed camera which enables photography of about 500 images per second, for example, even if synchronization with start or end of exposure of this camera is obtained, unnecessary excitation light is emitted to a sample for several milliseconds to several tens of milliseconds.

In the meantime, the mercury lamp or the xenon lamp is an electric power discharge tube, and cannot adjust a luminous flux continuously. Thus, dimming is carried out by reducing the luminous flux in stepwise manner using two or three ND filters. When naked eye observation using an eyepiece has been dominant, such stepwise dimming has been sufficient. However, in the fluorescence imaging as described above, weak fluorescence which cannot be recognized with naked eye is acquired as an image by means of a CCD camera having high sensitivity, and the acquired image is analyzed. In this imaging using weak fluorescence, very fine adjustment and high precision are required for dimming of excitation light.

An object of the present invention is to provide a microscope fluorescence illumination apparatus which is excellent in sample protection, operability, and power saving by using a solid-state illumination device as an illumination light source of fluorescence observation.

A microscope fluorescence illumination apparatus according to an aspect of the present invention is characterized by comprising: a light source having a solid-state illumination device which generates illumination light; an illumination optical system which guides the illumination light from the light source onto a sample; and a controller configured to control turning ON and OFF of the solid-state illumination device and dimming of the illumination light.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a schematic configuration of a microscope system using a microscope fluorescence illumination apparatus according to a first embodiment of the present invention;
FIG. 2 is a diagram showing a schematic configuration of a controller for use in the first embodiment;
FIG. 3 is a diagram showing a schematic configuration of an operation unit for use in the first embodiment;
FIG. 4 is a diagram showing a schematic configuration of a microscope system using a microscope fluorescence illumination apparatus according to a second embodiment of the present invention;
FIG. 5 is a diagram showing a schematic configuration of a controller for use in the second embodiment;
FIGS. 6A to 6C are views for explaining a relationship among turning ON/OFF an LED, an external signal output and exposure control of a CCD camera according to the second embodiment;
FIG. 7 is a diagram showing a schematic configuration of a microscope system using a microscope fluorescence illumination apparatus according to a third embodiment of the present invention;
FIG. 8 is a diagram showing a schematic configuration of a controller for use in the third embodiment;
FIGS. 9A and 9B are views for explaining a relationship between a control signal of a CCD camera and an LED control according to the third embodiment;
FIG. 10 is a diagram showing a schematic configuration of a microscope system using a microscope fluorescence illumination apparatus according to a fourth embodiment of the present invention;
FIG. 11 is a diagram showing a schematic configuration of a controller for use in the fourth embodiment;
FIG. 12 is a diagram showing a schematic configuration of an operation unit for use in the fourth embodiment;
FIGS. 13A to 13E are views for explaining a relationship between a dimmer indicator value and a PWN waveform according to the fourth embodiment; and
FIGS. 14A and 14B are views for explaining a relationship between a control signal output in a two-wavelength excitation mode and turning ON/OFF an LED of a CCD camera according to the fourth embodiment.

Hereinafter, preferred embodiments of the present invention will be described with reference to the accompanying drawings.

### (First embodiment)

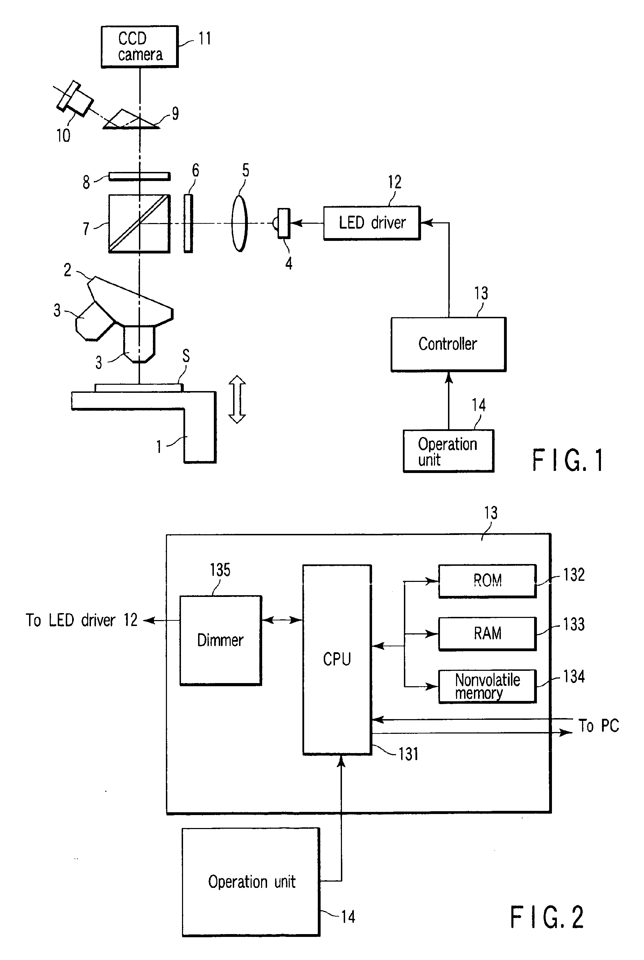

FIG. 1 shows a schematic configuration of a microscope system using a microscope fluorescence illumination apparatus according to a first embodiment of the present invention.

In FIG. 1, a fluorescence sample S is placed as a sample on a stage 1. The stage 1 can move vertically in an optical axis direction and the fluorescence sample S can be focused by moving the stage 1 in the vertical direction.

Above the stage 1, an objection lens 1 is allocated in proximity with the fluorescence sample S. A plurality of objective lenses 3 each having different magnification (two objective lenses in the figure) are held by a nosepiece 2, and the objective lenses 3 are positioned on an optical axis by a rotating operation of the nosepiece 2, whereby the fluorescence sample S can be observed.

In an optical path of the light emitted from an light emitting diode (LED) 4 which is a solid-state illumination device to be used as an illumination light source, a dichroic mirror 7 is allocated via a condenser 5 or an excitation filter 6 configuring an illumination optical system. The condenser 5 converts the light from the LED 4 to parallel light beams, and the excitation filter 6 transmits only the light having a wavelength in a bandwidth required for exciting the fluorescence sample S. The dichroic mirror 7 has such a feature of reflecting the excitation light transmitted through the excitation filter 6, and then, transmitting the fluorescence emitted from the fluorescence sample S.

In an optical path for reflecting the excitation light of the dichroic mirror 7, the fluorescence sample S on the stage 1 is allocated via the objective lens 3, and the excitation light is emitted from above the fluorescence sample S. The fluorescence emitted from the fluorescence sample S is produced as light shifted from a wavelength of the excitation light to a long wavelength, and the produced light is transmitted from the objective lens 3 through the dichroic mirror 7.

A barrier filter 8 and a beam splitter 9 configuring an observation optical system are allocated in an optical path transmitted through the dichroic mirror 7. The barrier filter 8 cuts the light other than a bandwidth of fluorescence and acquires an observation image having a good signal-to-noise ratio. The beam splitter 9 splits the light which is incident from the barrier filter 8 in two directions. An eyepiece 10 is allocated in one optical path and visual observation can be carried out. A CCD camera 11 serving as image pickup means which is an external device is allocated in the other optical path, and fluorescence can be picked up as an image.

A controller 13 is connected,to the LED 4 via an LED driver 12. The LED driver 12 controls turning ON/OFF the LED 4 in accordance with an instruction from the controller 13. An operation unit 14 serving as a man-machine interface is connected to the controller 13.

FIG. 2 is a diagram showing a schematic configuration of the controller 13. The controller 13 comprises a CPU 131, a ROM 132, a RAM 133, a nonvolatile memory 134, and a dimmer 135. The CPU 131, the ROM 132, the RAM 133, the nonvolatile memory 134, and the dimmer 135 are connected to one another via a CPU bus.

The ROM 132 stores a program which describes the content of control in the CPU 131. The RAM 133 stores data such as control processing. An EEPROM, a flash memory or the like is used for the nonvolatile memory 134, and required information is stored in or read from the nonvolatile memory 134 by executing the program. The dimmer 135 turns ON/OFF the LED 4 via the LED driver 12 in response to an instruction of turning ON/OFF the LED 4 from the CPU 131. The dimmer 135 also outputs a power variable signal to the LED driver 12 in response to a dimming instruction from the CPU 131 and makes dimming control for increasing or decreasing the illumination luminous flux of the LED 4.

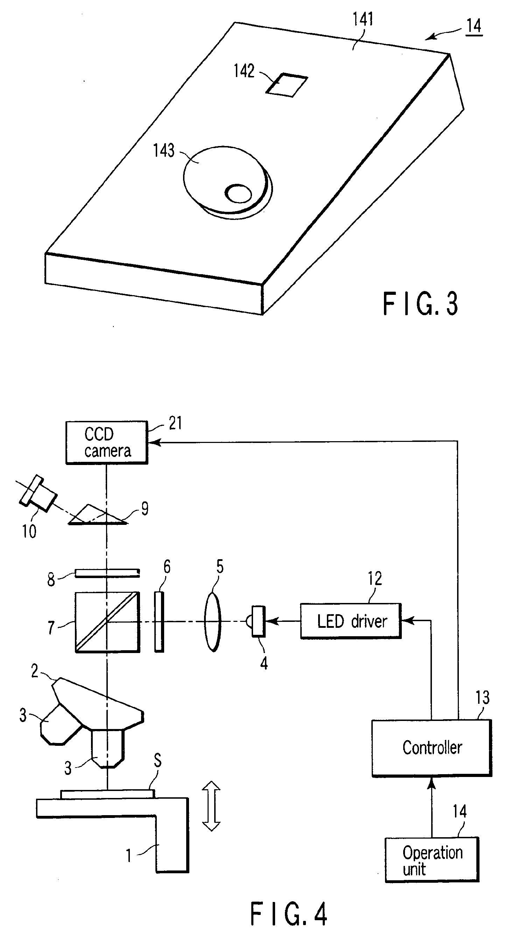

In the operation unit 14 connected to the controller 13 as a man-machine interface, as shown in FIG. 3, a button 142 and a dimmer dial 143 are allocated on a surface of an operation unit main body 141, and each of these button and dial is connected to the CPU 131. The button 142 outputs an operation signal for turning ON/OFF the LED 4 in response to a push operation or a release operation. The operation signal can be read out by the CPU 131. In addition, the dimmer dial 143 outputs a dimming operation signal according to an operation angle (rotation angle). The dimming operation signal can be read out by the CPU 131. When the CPU 131 has received a variety of operation signals from the operation unit 14, the CPU 131 controls each unit in response to each of these operation signals.

The controller 13 has an external communication unit such as RS-232C, USB, or Ethernet (not shown). From an external device such as a personal computer (PC) (hereinafter, referred to as a host), the CPU 131 transmits and receives a command via an interface (I/F) (not shown), thereby making control equivalent to the operation from the operation unit 14 and making external information exchange.

A description will be given with respect to an operation of the microscope fluorescence illumination apparatus according to the first embodiment configured as described above.

Assume that the LED 4 is turned OFF in an initial state. In this state, the button 142 on the operation unit 14 is pushed. Then, the CPU 131 of the controller 13 detects a push operation of the button 142; reads out an operation angle (rotation angle) of the dimmer dial 143; and outputs to the dimmer 135 an electric power indicator value according to the operation angle.

The dimmer 135 generates an electric power indicator signal which corresponds to the dimmer indicator value from the CPU 131 and outputs this electric power indicator signal to the LED driver 12. The LED driver 12 turns ON the LED 4 at brightness (luminous flux) which corresponds to the dimmer indicator value.

When the dimmer dial 143 on the operation unit 14 is operated from a state in which the LED 4 is turned ON, the CPU 131 detects an amount of dial operation. The CPU 131 reads out an operation angle (rotation angle) from the dimmer dial 143, and outputs to the dimmer 135 the dimmer indicator value according to the rotation angle. The dimmer 135 outputs the dimmer indicator value from the CPU 131 to the LED driver 12. The LED driver 12 outputs an electric power indicator signal which corresponds to the dimmer indicator value from the CPU 131, and turns ON the LED 4 at the brightness which corresponds to the dimmer output value. In this manner, the LED 4 can be turned ON at arbitrary brightness (luminous flux) by adjusting the operation angle (rotation angle) of the dimmer dial 143 on the operation unit 14.

Next, when the button 142 on the operation unit 14 is released, the CPU 131 detects a release operation of the button 142; determines an instruction for turning OFF power; and outputs a turning OFF signal to the dimmer 135. The dimmer 135 outputs a turning OFF signal from the CPU 131 to the LED driver 12. The LED driver 12 turns OFF the LED 4 in accordance with the turning OFF signal.

As described above, for example, the LED 4 which is a solid-state illumination device has been used as a light source for fluorescence illumination. Thus, in comparison with a conventional mercury lamp or a xenon lamp used as a light source, continuous adjustment of turning ON/OFF control and brightness (luminous flux) can be easily made; excellent operability can be obtained; and power saving can be achieved. In this manner, during observation or photography under fluorescence observation (in particular, fluorescence imaging), emission of excitation light can be carried out only during a required period of time. Therefore, sample bleaching due to wasteful emission of excitation light cased by carelessness of an observer, a coarse control method and the like can be avoided to the minimum, and the damage to a living sample can be reduced to the minimum. That is, excellent sample protection can be achieved.

A high voltage power supply required for power discharge of a mercury lamp or a xenon lamp can be eliminated, thus making it possible to ensure downsizing and/or space reduction of whole equipment configuration. Further, the LED 4 serving as a light source is low in heat generation, and thus, there can be reduced an effect of a thermal drift of a microscope which becomes a problem in fluorescence observation for a long time (single molecule fluorescence imaging or fluorescence time lapse).

### (Modification 1)

Although the LED 4 is turned ON/OFF by a push operation or a release operation of one button 142 in the first embodiment, a so-called toggle operation control button can be used such that turning ON/OFF is replaced with each other every time the button 142 is pushed. In addition, for example, two buttons are provided, and one button and the other button independently function as a button for turning ON the LED 4 and as a button for turning OFF the LED 4, respectively. This makes it possible to improve operability. Moreover, an illumination light type button having a small sized light emitting element incorporated therein is used as the button 142, whereby a configuration may be used such that the small sized light emitting element is turned ON/OFF in association with turning ON/OFF the LED 4. By doing this, a control state of turning ON/OFF the LED 4 can be easily visually checked.

### (Second embodiment)

A second embodiment of the present invention will be described.

FIG. 4 shows a schematic configuration of a microscope system using a microscope fluorescence illumination apparatus according to the second embodiment of the present invention. Like elements in FIG. 1 are designated by like reference numerals.

In this case, a CCD camera 21 having an exposure control signal input terminal is allocated in a photography optical path split by the beam splitter 9. The CCD camera 21 can control the start and end of exposure in response to a signal of a TTL level that is inputted from another device to the exposure control signal input terminal. Here, when an exposure standby state is set by a camera controller (not shown), exposure is started at a high input signal level and an exposure state is established in response to a signal level inputted to the exposure control signal input terminal. Then, exposure is terminated at a low input signal level, and an exposure standby state is established again.

The other elements are identical to those shown in FIG. 1.

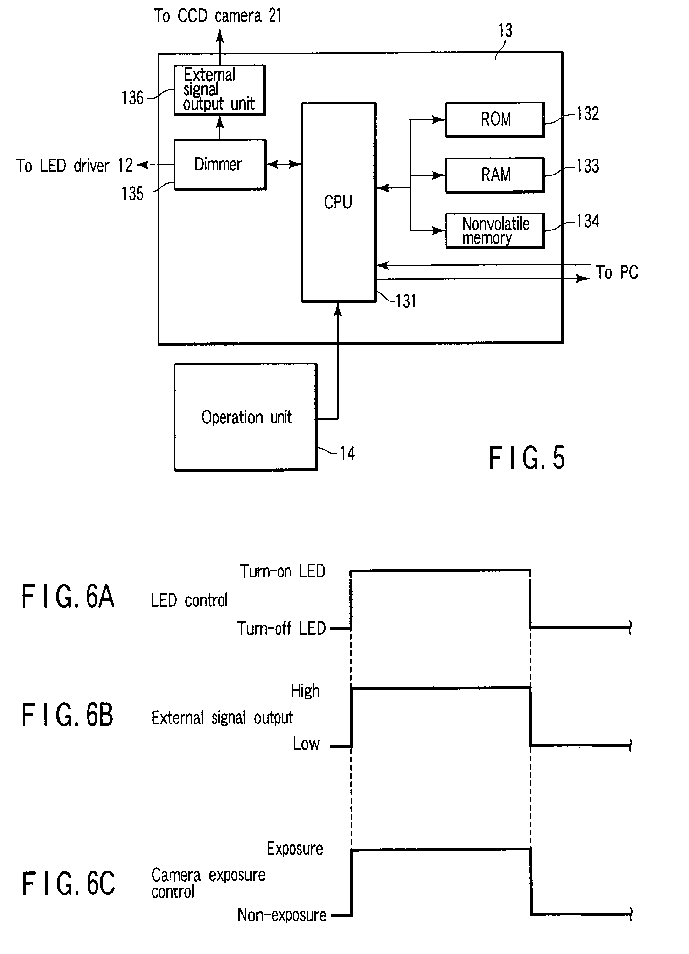

FIG. 5 shows a schematic configuration of the controller 13. Like elements shown in FIG. 2 are designated by like reference numerals. In this case, an external signal output unit 136 is connected to the dimmer 135. The external signal output unit 136 outputs a TTL level signal serving as a control signal of the CCD camera 21 in accordance with an instruction for turning ON/OFF the LED 4 from the CPU 131. The external signal output unit 136 outputs a high level when the LED 4 is turned ON, and outputs a low level when the LED 4 is turned OFF. An output signal from the external signal output unit 136 is inputted to the exposure control signal input terminal of the CCD camera 21 via a cable (not shown).

The other elements are identical to those shown in FIG. 2.

A description will be given with respect to an operation according to the second embodiment configured as described above.

Assume that the LED 4 is turned OFF as an initial state. In addition, the CCD camera 21 is set to an exposure standby state by the camera controller (not shown). When the button 142 on the operation unit 14 is pushed in this state, the CPU 131 detects a push operation of the button 142; reads out an operation angle (rotation angle) of the dimmer dial 143; and outputs to the dimmer 135 the dimmer indicator value according to the operation angle.

The dimmer 135 outputs an electric power indicator signal which corresponds to the dimmer indicator value to the LED driver 12, and turns ON the LED 4 at the brightness (luminous flux) which corresponds to the dimmer indicator value (FIG. 6A). At the same time, the dimmer 135 outputs an electric power indicator signal to the external signal output unit 136. The external signal output unit 136 generates a high level signal by turning ON the LED 4 (FIG. 6B), and outputs the generated signal to the exposure control signal input terminal of the CCD camera 21. In this manner, the CCD camera 21 having received the high level input signal from the external signal output unit 136 starts exposure (FIG. 6C).

Then, when the button 142 on the operation unit 14 is released, the CPU 131 detects a release operation of the button 142; determines a turning OFF instruction; and outputs a turning OFF signal to the dimmer 135. Having received this signal, the dimmer 135 outputs the turning OFF signal to the LED driver 12, and turns OFF the LED 4 (FIG. 6A). In addition, the dimmer 135 outputs the turning OFF signal to the external signal output unit 136. The external signal output unit 136 generates a low level signal by turning OFF the LED 4 (FIG. 6B), and outputs the generated signal to the external control signal input terminal of the CCD camera 21. In this manner, the CCD camera 21 having received the low level input signal from the external signal output unit 136 ends exposure (FIG. 6C).

As described above, exposure at the CCD camera 21 is carried out only during a period in which excitation light is emitted to the fluorescence sample S. Thus, in particular, in observation with a naked eye through the eyepiece 10, unnecessary excitation light can be prevented from being reliably carried out in weak fluorescence imaging which cannot be recognized at all.

### (Modification 1)

In the second embodiment, the high/low level signal is outputted at the same time as when the LED 4 is turned ON/OFF by operation of the button 142 on the operation unit 14. However, for example, an auxiliary button is provided on the operation unit 14, whereby enabling/disabling of an output of a high/low level signal corresponding to turning ON/OFF the LED 4 may be controlled by operation of the auxiliary button. In this manner, while the output of the high/low level signal corresponding to turning ON/OFF the LED 4 is enabled, it is possible to employ a control such that operation of the dimmer dial 143 is disabled. Moreover, undesired dimming during exposure of the CCD camera 21 can be prevented in advance.

### (Third embodiment)

A third embodiment of the present invention will be described.

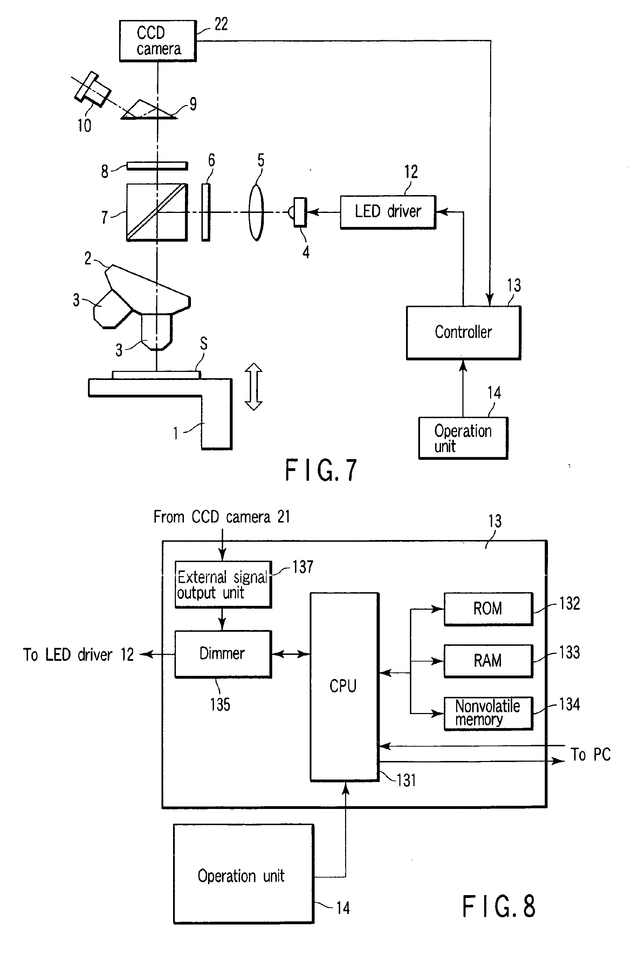

FIG. 7 is a diagram showing a schematic configuration of a microscope system using a microscope fluorescence illumination apparatus according to the third embodiment of the invention. Like elements shown in FIG. 1 are designated by like reference numerals.

In the embodiment as well, a CCD camera 22 having an exposure control signal output terminal is allocated in a photography optical path split by the beam splitter 9. The CCD camera 22 outputs a TTL level signal from the exposure control signal output terminal in accordance with an exposure control state. Here, when exposure is started by operation of a camera controller (not shown), a high level signal is outputted from the exposure control signal output terminal. When exposure is terminated after elapse of a predetermined time, a low level signal is outputted therefrom. Namely, the CCD camera 22 according to the embodiment can notify another device of the exposure control state. A signal from the exposure control signal output terminal of the CCD camera 22 is inputted to the controller 13 via a cable (not shown).

The other elements are identical to those shown in FIG. 1.

FIG. 8 is a diagram showing a schematic configuration of the controller 13. Like elements shown in FIG. 2 are designated by like reference numerals. In FIG. 8, an external signal input unit 137 which receives a TTL level of an instruction input command according to an operating state of the CCD camera 22 is connected to the dimmer 135. In the case where capturing of the instruction input command is enabled by the CPU 131, the dimmer 135 turns ON/OFF the LED 4 in response to the instruction input signal of the external signal input unit 137. Here, when the instruction input signal of the external signal input unit 137 is at a high level, the LED 4 is turned ON. When the instruction input signal of the external signal input unit 137 is at a low level, the LED 4 is turned OFF. On the other hand, in the case where capturing of the instruction input signal is disabled by the CPU 131, the dimmer 135 turns ON/OFF the LED 4 via the LED driver 12 in accordance with an instruction for turning ON/OFF the LED 4 from the CPU 131 regardless of the instruction input signal of the external signal input unit 137. Further, the dimmer 135 is designed to adjust a power variable signal for the LED driver 12 and increase or decrease the illumination luminous flux by the LED 4 in accordance with a dimming instruction from the CPU 131.

The other elements are identical to those shown in FIG. 2.

A description will be given with respect to an operation of the microscope fluorescent illuminating apparatus according to the third embodiment configured as described above.

As an initial state, assume that the capturing of the instruction input signal to the external input unit 137 is disabled and the CCD camera 22 is not in an exposure state.

When the dimmer dial 143 on the operation unit 14 is operated in this state, the CPU 131 reads out an operation angle of the dimmer dial 143 and outputs to the dimmer a dimmer indicator value which corresponds thereto. The dimmer 135 outputs to the LED driver 12 a power indicator signal which corresponds to the dimmer indicator value and turns ON the LED 4 at the brightness (luminous flux) which corresponds to the dimmer indicator value. In this case, the dimmer 135 holds the dimmer indicator value.

Next, when the button 142 on the operation unit 14 is pushed, the CPU 131 detects the push operation of the button 142 and enables the dimmer 135 to turn OFF the LED and the external signal input unit 137 to capture the instruction input signal. The dimmer 135 turns OFF the LED 4 via the LED driver 12 and enters a standby state of the instruction input signal for the external signal input unit 137.

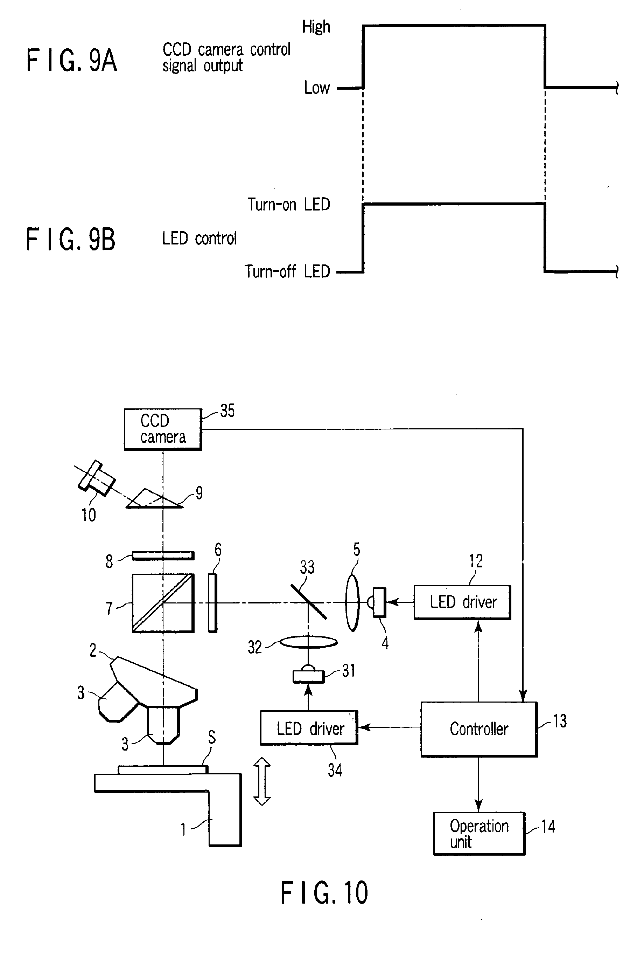

In this state, when the CCD camera 22 starts exposure by making an operation for the camera controller (not shown), a high level signal is generated from the exposure control signal output terminal, and the fact is notified to the external signal input unit 137 (FIG. 9A). The dimmer 135 outputs to the LED driver 12 an electric power indicator signal which corresponds to the dimmer indicator value held in advance and turns ON the LED 4 in response to the high level signal of the external signal input unit 137 (FIG. 9B).

Next, when exposure during a predetermined time period by the CCD camera 22 is terminated, a low level signal is generated from the exposure control signal output terminal, and the fact is notified to the external signal input unit 137 (FIG. 9A). The dimmer 135 turns OFF the LED 4 via the LED driver 12 in response to the low level signal from the external signal input unit 137 (FIG. 9B).

As described above, excitation light is emitted to the fluorescence sample S only while exposure is carried out by the CCD camera 22. Thus, even in the case where an exposure time due to automatic exposure of the CCD camera 22 changes, emission can be carried out smoothly without any problem and minimum excitation light emission can be achieved as required.

### (Fourth embodiment)

A fourth embodiment of the present invention will be described.

FIG. 10 is a diagram showing a schematic configuration of a microscope system using a microscope fluorescence illumination apparatus according to the fourth embodiment of the invention. Like elements shown in FIG. 1 are designated by like reference numerals.

In the embodiment, an LED 31 as well as the LED 4 is allocated as an illumination light source. The LED 31 has a light emitting main wavelength which is different from the LED 4.

A condenser 32 and a dichroic mirror 33 are allocated in an optical path of the light emitted from the LED 31. The condenser 32 converts the light emitted from the LED 31 into parallel light beams. The dichroic mirror 33 is provided at a position at which the optical path of the light emitted from the LED 1 and the optical path of the light emitted from the LED 4 intersect against each other. The dichroic mirror 33 has a feature of reflecting the wavelength light from the LED 31 and transmitting the wavelength light from the LED 4.

The controller 13 is connected to the LED 31 via an LED driver 34. The LED driver 34 controls turning ON/OFF of the LED 31 in accordance with an instruction supplied from the controller 13.

A CCD camera 35 having an exposure control signal output terminal is allocated on an optical path for photography split by the beam splitter 9. The CCD camera 35 outputs a TTL level signal from the exposure control signal output terminal in accordance with an exposure control state. Here, when exposure is started by an operation of a camera controller (not shown), a high level signal is outputted from the exposure control signal output terminal. When exposure is terminated after elapse of a predetermined time, a low level signal is outputted therefrom. Namely, the CCD camera 35 can notify another device of the exposure control state. In addition, the CCD camera 35 is provided as a fully pixel readout interline type CCD high speed camera. The camera enables exposure of several milliseconds at an exposure data transfer time of some tens of microseconds and repetition continuous image pickup. A signal from the exposure control signal output terminal of the CCD camera 35 is inputted to the controller 13 via a cable (not shown).

The other elements are identical to those shown in FIG. 1.

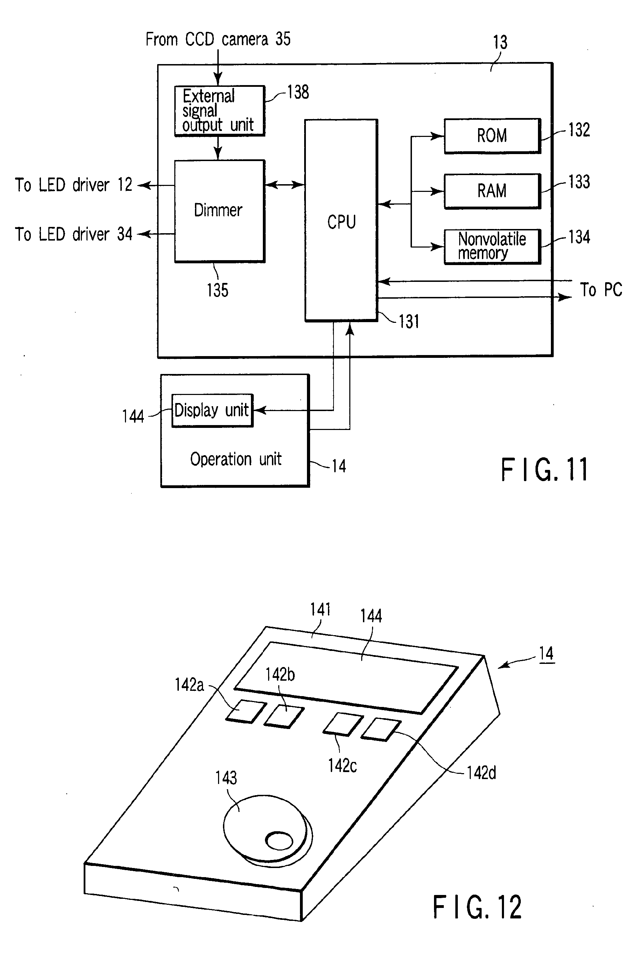

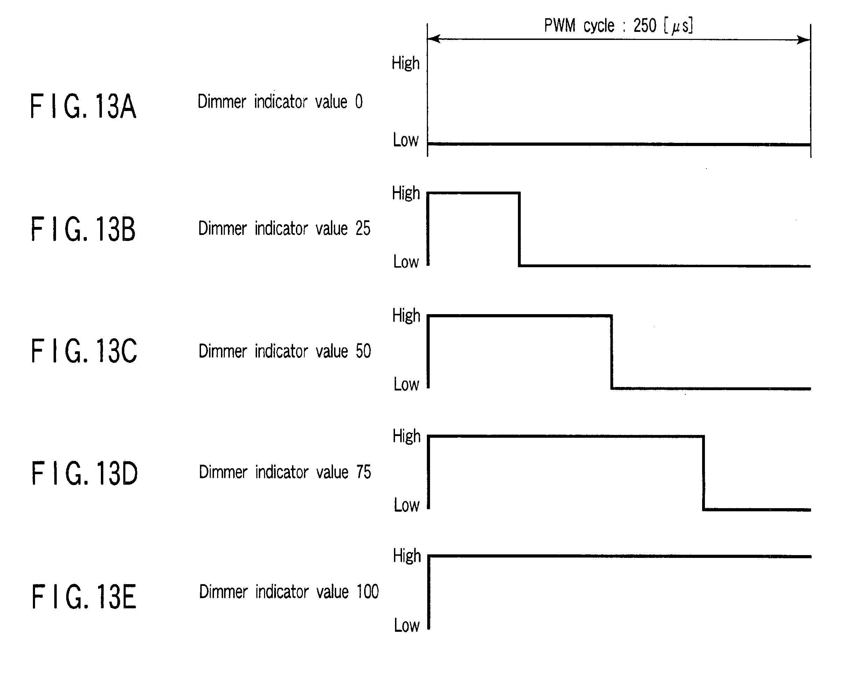

FIG. 11 is a diagram showing a schematic configuration of the controller 13. Like elements shown in FIG. 2 are designated by like reference numerals. In the embodiment as well, an external signal input unit 138 which receives an indicator input signal (TTL level) according to the operating state of the CCD camera 35 is connected to the dimmer 135. In addition, the LED driver 12 and an LED driver 34 are connected to the dimmer 135, so that the LED 4 and the LED 31 can be turned ON/OFF in response to the indicator input signal from the external signal input unit 138. Further, the dimmer 135 having received the dimmer indicator value from the CPU 131 outputs to the LED driver 12 and the LED driver 34 the pulse width modulation (PWM) waveform which corresponds to this dimmer indicator value. For example, the PWM cycle is 250 microseconds and a duty (ratio between high level and low level of PWM cycle) can be varied in accordance with the dimmer indicator value in units of 2.5 microseconds. Specifically, in the case where the dimmer indicator values are set to 0, 25, 50, 75, and 100, the PWM waveform duty as shown in FIGS. 13A to 13E can be obtained in accordance with the dimmer indicator value.

The LED driver 12 supplies a current Ia to the LED 4 only while the PWM waveform inputted from the dimmer 135 is at a high level and interrupts the current Ia while it is at a low level. The current Ia is preset to the LED driver 12 and is adjusted in accordance with a feature of the LED 4. By varying a time during which the current Ia is thus supplied, the luminous flux radiated from the LED 4 is varied, and the excitation light illumination from the LED 4 is dimmed.

In the same manner as that described above, the LED driver 34 also supplies a current Ib to the LED 31 only while the PWM waveform inputted from the dimmer 135 is at a high level and interrupts the current Ib while it is at a low level. The current Ib is also preset to the LED driver 34 and adjusted in accordance with a feature of the LED 31. By varying a time at which the current Ib is thus supplied, the luminous flux radiated from the LED 31 is varied and the excitation light illumination from the LED 31 is dimmed.

The other elements are similar to those shown in FIG. 2.

The operation unit 14 serving as a man-machine interface is connected to the controller 13 configured as described above.

FIG. 12 is a view showing a schematic configuration of the operation unit 14. Like elements shown in FIG. 3 are designated by like reference numerals. In FIG. 12, the operation unit 14 is allocated on the surface of the operation unit main body 141. In addition to the dimmer dial 143, the operation unit comprises four buttons 142a, 142b, 142c, 142d which form an operating input unit, and further, comprises an LCD 144 serving as a display unit.

The buttons 142a, 142b, 142c, 142d each outputs an operation signal according to a push operation or a release operation. These operation signals can be read out by the CPU 131. The button 142a turns ON/OFF the LED 4. The button 142b turns ON/OFF the LED 31. The button 142c selects an LED targeted for dimming. Dimming objects of the dimmer dial 143 are toggle-selected as the LED 4, the LED 31, the LED 4, ... every time the button 142c is operated. The button 142d toggle-switches two control modes, i.e., a normal mode and a two-wavelength excitation mode described later every time the button is operated.

The LCD 144 displays various kinds of setting information or operation information in accordance with an instruction from the CPU 131. Then, the CPU 131 having received an operation signal from the operation unit 14 controls each unit in response to the operation signal.

The other elements are similar to those shown in FIG. 3.

A description will be given with respect to an operation of the microscope fluorescence illumination apparatus according to the fourth embodiment configured as described above.

As an initial state, assume that the LED 4 and the LED 31 are turned ON and in a normal mode, and the CCD camera 35 is not in an exposure state. In addition, assume that the LED 4 is selected as a dimming target.

When the dimmer dial 143 is operated in this state, the CPU 131 detects this operation. The CPU 131 reads out an operation angle (rotation angle) of the dimmer dial 143 and outputs to the dimmer 135 the dimmer indicator value according to the operation angle.

The dimmer 135 outputs the PWM waveform according to the dimmer indicator value to the LED driver 12 and turns ON the LED 4 at the brightness (luminous flux) which corresponds to the dimmer indicator value. In this case, when the dimmer dial 143 is set at the maximum operation angle, the CPU 131 outputs to the dimmer 135 "100" which is the maximum dimmer indicator value. Then, the dimmer 135, as shown in FIG. 13C, outputs to the LED driver 12 the PWM waveform when all the periods of the PWN cycle are at a high level. In this manner, the LED 4 radiates the maximum luminous flux specified by the supply current Ia and carries out the brightest excitation light illumination for the fluorescence sample S.

Next, when the button 142c is operated, the CPU 131 detects this operation; outputs to the dimmer 135 a switch signal of a dimming target; and switches the dimming target from the LED 4 to the LED 31. When the dimmer dial 143 is operated in this state, the CPU 131 reads out an operation angle (rotation angle) of the dimmer dial 143 and outputs to the dimmer 135 the dimmer indicator value according to the operation angle.

The dimmer 135 outputs to the LED driver 34 the PWM waveform according to the dimmer indicator value and turns ON the LED 31 at the brightness (luminous flux) which corresponds to the dimmer indicator value. In this case, when the dimmer dial 143 is set at an intermediate operation angle, the CPU 131 outputs to the dimmer 135 "50" which is the intermediate dimmer indicator value. The dimmer 135 outputs to the LED driver 34 the PWM waveform when a period which is half of the PWM cycle is at a high level, as shown in FIG. 13C. In this manner, the LED 31 radiates half of the maximum luminous flux specified by the supply current Ia and carries out excitation light illumination for the fluorescence sample S at the brightness which is half of the maximum brightness.

Next, when the button 142d is operated, the CPU 131 detects this operation and switches the normal mode to the two-wavelength excitation mode. The CPU 131 outputs a signal indicating the two-waveform excitation mode to the dimmer 135. The dimmer 135 fixes a current level to a low level based on the PWM waveform outputs to the LED driver 12 and the LED driver 34 while holding the dimmer indicator values of the LED 4 and the LED 31. In this manner, both of the LED 4 and the LED 31 are turned OFF, and the excitation input illumination for the fluorescence sample S is eliminated. Then, the dimmer 135 enters an instruction input signal standby state for the external signal input unit 138.

Now, an operation of the two-wavelength excitation mode will be described here. Assume that the CCD camera 35 is constant in exposure time for each shot described later.

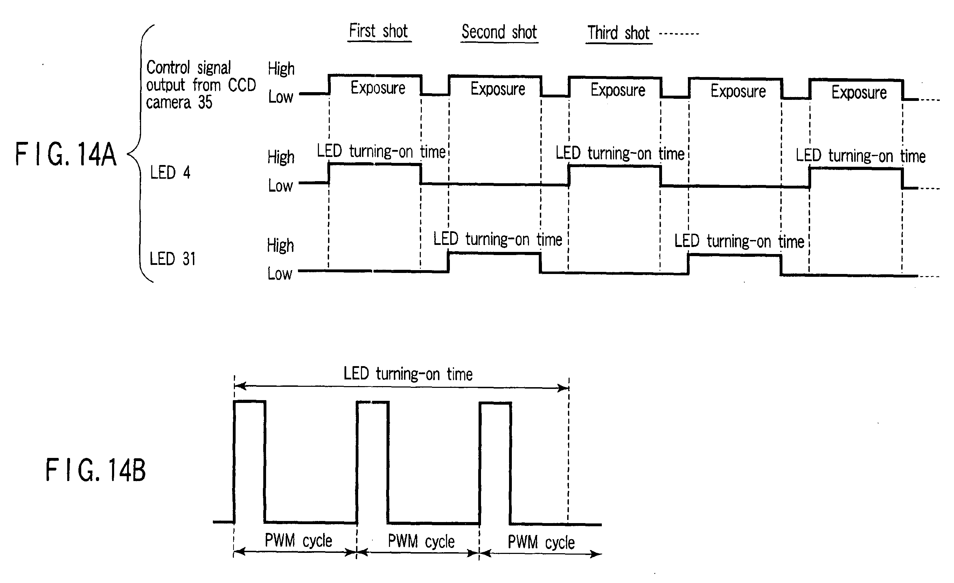

When the CCD camera 35 starts a first exposure by operation of the camera controller (not shown) (refer to a period of a first shot shown in FIG. 14A), a high level signal is outputted from the exposure control signal output terminal, and the outputted signal is sent to the external signal input unit 138. The dimmer 135 outputs the PWM waveform (PWM waveform corresponding to the held dimmer indicator value) to the LED driver 12 immediately due to input of the high level signal to the external signal input unit 138 (refer to FIG. 14B). In this manner, the PWM waveform is outputted to the LED driver in synchronization with the input of the high level signal to the external signal input unit 138, and the excitation light illumination by the LED 4 is started.

When the first exposure (image pickup of the fluorescence image of the fluorescence sample S by the excitation light illumination of the LED 4) by the CCD camera 35 is terminated, a low level signal is outputted from the exposure control signal output terminal of the CCD camera 35 and the CCD camera 35 starts transfer and readout of the first image. The low level signal outputted from the exposure control signal output terminal of the CCD camera 35 is sent to the external signal input unit 138.

The dimmer 135 outputs the PWM waveform (all the periods of the PWM cycle are at a low level) to the LED driver 12 due to input of the low level signal to the external signal input unit 138. In this manner, the low level signal is outputted to the LED driver 12 in synchronization with the input of the low level signal of the external signal input unit 138, and the excitation light illumination by the LED 4 is turned OFF.

The CCD camera 35 is also connected to an image acquisition board (not shown). The image acquisition board is mounted on a PC (not shown) via a PCI bus or the like. In this manner, the CCD camera 35 transfers the read-out image data to the PC.

When image transfer by the CCD camera 35 is terminated (within some tens of microseconds in a fast case), next exposure is enabled. When the CCD camera 35 starts a second exposure (refer to a second exposure period shown in FIG. 14A), a high level signal is outputted from the exposure control signal output terminal and the outputted signal is sent to the external signal input unit 138. The dimmer 135 outputs the PWM waveform (PWM waveform corresponding to the held dimmer indicator value) to the LED driver 34 immediately due to input of the high level signal to the external signal input unit 138 (refer to FIG. 14B). In this manner, the PWM waveform is outputted to the LED driver 34 in synchronization with the input of the high level signal to the external signal input unit 138, and the excitation light illumination by the LED 31 is started.

When the first exposure at the CCD camera 35 (pickup of the fluorescence image of the fluorescence sample S by excitation light illumination of the LED 4) is terminated in this state, a low level signal is outputted from the exposure control signal output terminal of the CCD camera 35, and the CCD camera 35 starts transfer and readout of the first image. The low level signal outputted from the exposure control signal output terminal of the CD camera 35 is sent to the external signal input unit 138.

The dimmer 135 outputs the PWM waveform (when all the periods of the PWM cycle are at a low level) to the LED driver 12 immediately due to input of the low level signal to the external signal input unit 138. In this manner, the low level signal is outputted to the LED driver 12 in synchronization with the input of the low level signal to the external signal input unit 138, and the excitation light illumination by the LED 4 is turned OFF.

The CCD camera 35 is also connected to an image acquisition board, although not shown. The image acquisition board is mounted on a PC, although not shown, via a PCI bus or the like. When image transfer by the CCD camera 35 is terminated (within some tens of microseconds in a fast case), next exposure is enabled. When the CCD camera 35 starts a second exposure (refer to a period of the second exposure shown in FIG. 14A), a high level signal is outputted from the exposure control signal outputted terminal, and the outputted signal is sent to the external signal input unit 138. The dimmer 135 outputs the PWM waveform (PWM waveform corresponding to the held dimmer indicator value) to the LED driver 34 by inputting the high level signal to the external signal input unit 138 (refer to FIG. 14B). In this manner, the PWM waveform is outputted to the LED driver 34 in synchronization with the input of the high level signal to the external signal input unit 138 and the excitation light illumination by the LED 31 is started.

When the second exposure at the CCD camera 35 (pickup of fluorescence image of fluorescence sample S by excitation light illumination of LED 31) is terminated, a low level signal is outputted from the exposure control output terminal of the CCD camera 35 and the CCD camera 35 starts transfer and readout of a second image. The low level signal outputted from the exposure control signal output terminal of the CCD camera 35 is sent to the external signal input unit 138.

The dimmer 135 outputs the PWM waveform (when all the periods of the PWM cycle are at a low level) to the LED driver 34 immediately due to input of the low level signal to the external signal input unit 138 (refer to FIG. 14B). In this manner, the low level signal is outputted to the LED driver 34 in synchronization with the input of the low level signal of the external signal input unit 138, and the excitation light illumination by the LED 31 is turned OFF.

In this case as well, the CCD camera 35 transfers the read-out image data to the PC.

When image transfer by the CCD camera 35 is terminated, next exposure is enabled. When the CCD camera 35 starts a third exposure (refer to a period of third exposure shown in FIG. 14A), a high level signal is outputted from the exposure control signal output terminal and the outputted signal is sent to the external signal input unit 138. The dimmer 135 outputs the PWM waveform (PWM waveform corresponding to the held dimmer indicator value) to the LED driver 12 immediately due to input of the high level signal to the external signal input unit 138. In this manner, the low level signal is outputted to the LED driver 12 in synchronization with the input of the high level signal of the external signal input unit 138, and the excitation light illumination by the LED 4 is started.

Similarly, the above-described operation is then repeated until the exposure count set at the camera controller (not shown) of the CCD camera 35 has been terminated. In this case, a fluorescence image of the fluorescence sample S due to the excitation light illumination of the LED 4 is acquired during exposure in odd numbered shot of the CCD camera 35. A fluorescence image of the fluorescence sample S due to the excitation light illumination of the LED 31 is acquired during exposure in even numbered shot of the CCD camera 35.

It is preferable that the apparatus according to the fourth embodiment configured as described above is applied to two-wavelength ratio imaging in which Fura 2 has been introduced as calcium ion concentration measurement. In this case, an LED having a light emitting main wavelength of 340 nm and an LED having a light emitting main wavelength of 380 nm are used for the LED 4 and the LED 31, respectively. The switching of these two types of excitation light beams (340 nm and 380 nm) is carried out by using an exposure control signal output from the CCD camera 35. In this manner, there can be achieved two-wavelength switching in order of microseconds which have been conventionally impossible in a mechanical configuration such as a high speed shutter or a high speed filter wheel.

As described above, PWM control which is a dimming control can be started in synchronization with the start of each exposure of the CCD camera 35. Thus, the acquired image by each exposure can be obtained as a stable fluorescence image without any distortion or instability in excitation light illumination. As a result, a ratio having good precision can be obtained. In addition, the required minimum excitation light illumination is achieved for the fluorescence sample S. Thus, the damage to a living cell can be remarkably reduced than conventionally, enabling observation or fluorescence imaging of the living cell for a long time.

### (Modification 1)

While the fourth embodiment has described activity taken by operations of the buttons 142a, 142b, 142c, 142d at the operation unit 14, the apparatus of the present invention has a command set including a plurality of control commands. Therefore, by using an external communication unit (not shown) and transmitting and receiving the command set by a proper application on the PC, a GUI application can achieve a further integrated, sophisticated fluorescence imaging work environment.

According to the embodiments of the present invention, there can be provided a microscope fluorescence illumination apparatus having excellence in sample protection, operability, and power saving, in which emission of the excitation light can be carried out only during the required minimum period during observation or photography in fluorescence observation by using a solid-state illumination device as a light source for illumination of the fluorescence observation.

## Claims

1. A microscope fluorescence illumination apparatus, **characterized by** comprising:
a light source (12) having a solid-state illumination device which generates illumination light;
an illumination optical system (5, 6, 7) which guides the illumination light from the light source onto a sample; and
a controller (13) configured to control turning ON and OFF of the solid-state illumination device and dimming of the illumination light.

2. A microscope fluorescence illumination apparatus according to claim 1, **characterized by** further comprising:
an observation optical system (8, 9) to which fluorescence generated from the sample is guided; and
an external device (11) which captures the fluorescence guided to the observation optical system, wherein
the controller has a signal output unit which outputs a control signal to the external device in response to turning ON or OFF of the solid-state illumination device.

3. A microscope fluorescence illumination apparatus according to claim 1, **characterized by** further comprising:
an observation optical system (8, 9) to which fluorescence generated from the sample is guided; and
an external device (11) which captures the fluorescence guided to the observation optical system, wherein
the controller has a signal input unit to which a signal according to an operating state of the external device is inputted, and controls turning ON or OFF of the solid-state illumination device based on the signal inputted to the signal input unit.

4. A microscope fluorescence illumination apparatus according to claim 3, **characterized in that**
the light source has at least two solid-state illumination devices, and
the controller controls turning ON/OFF of the solid-state illumination devices in order in response to the signal inputted to the signal input unit in accordance with the operating state of the external device.

5. A microscope fluorescence illumination apparatus according to any one of claims 1 to 4, **characterized in that** the controller dims illumination light of the solid-state illumination devices by means of pulse width modulation control.

6. A microscope fluorescence illumination apparatus according to claim 3 or 4, **characterized in that** the controller executes pulse width modulation control in synchronization with a turning ON control period of the solid-state illumination device to control turning ON or OFF in response to the signal inputted to the signal input unit in accordance with the operating state of the external device.

7. A microscope fluorescence illumination apparatus according to any one of claims 1 to 6, **characterized in that** an external device is imaging device which images the fluorescence guided to the observation optical system.

8. A microscope fluorescence illumination apparatus according to any one of claims 1 to 7, **characterized in that** the controller has an operation unit comprising an operation input unit which operates turning ON and OFF the solid-state illumination devices and a dimming operation unit which operates dimming of the solid-state illumination devices.

9. A microscope fluorescence illumination apparatus according to any one of claims 1 to 8, **characterized in that** the solid-state illumination devices each have an LED.
